(19) Europäisches Patentamt
European Patent Office
Office européen des brevets

(11) **EP 4 660 664 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
**G01S 13/10** (2006.01)

(21) Application number: **23930265.6**

(52) Cooperative Patent Classification (CPC):
**G01S 13/10**

(22) Date of filing: **27.03.2023**

(86) International application number:
**PCT/JP2023/012066**

(87) International publication number:
**WO 2024/201625 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mitsubishi Electric Corporation Tokyo 100-8310 (JP)**

(72) Inventors:
• **MATSUDA, Shoji**
**Tokyo 100-8310 (JP)**
• **ITO, Toshihiro**
**Tokyo 100-8310 (JP)**
• **TAKAHASHI, Ryuhei**
**Tokyo 100-8310 (JP)**

(74) Representative: **Pfenning, Meinig & Partner mbB Patent- und Rechtsanwälte Theresienhöhe 11a 80339 München (DE)**

(54) **TARGET DETECTION DEVICE AND TARGET DETECTION METHOD**

(57)    A target detection device (2) includes: a signal distribution unit (11) to acquire a reception signal indicating a reflected wave of a pulse wave every time the pulse wave is emitted into space and divide a plurality of acquired reception signals; a plurality of signal compression units (12-1) to (12-N) to compress respective reception signals after dividing by the signal distribution unit (11); and a plurality of signal recovery units (13-1) to (13-N) to recover a delay time of a reception signal after compression by any one signal compression unit (12-n) (n = 1, ..., N) among the signal compression units (12-1) to (12-N) and a complex amplitude of the reception signal after compression and output a recovery signal indicating the delay time and the complex amplitude. Further, the target detection device (2) includes a correlation processing unit (14) to extract signal components correlated with each other from recovery signals output from the plurality of signal recovery units (13-1) to (13-N), and a target detection unit (15) to detect a target on the basis of the signal components extracted by the correlation processing unit (14).

FIG. 1

EP 4 660 664 A1

**Description**

TECHNICAL FIELD

The present disclosure relates to a target detection device and a target detection method.

BACKGROUND ART

There is a target detection device that acquires a reception signal indicating a reflected wave that is a pulse wave reflected by a target every time a pulse wave is emitted into space, and detects the target on the basis of the reception signal.

As such a target detection device, for example, Non Patent Literature 1 discloses a target detection device including a signal compression unit and a signal processing unit.

The signal compression unit compresses the reception signal in order to reduce a processing load of target detection in the signal processing unit. The signal processing unit detects a target on the basis of a reception signal after compression by the signal compression unit.

CITATION LIST

NON PATENT LITERATURE

Non Patent Literature 1: M. Mishall, YC. Eldar, "Sub-Nyquist Sampling", IEEE Signal Processing Magazine, Nov. 2011, vol. 28, no. 6, p. 98-124.

SUMMARY OF INVENTION

TECHNICAL PROBLEM

In the target detection device disclosed in Non-Patent Literature 1, since the signal processing unit recovers the target signal on the basis of the reception signal after compression by the signal compression unit, a loss occurs in the process of recovering the target signal. As a result, there is a problem that the target detection performance by the signal processing unit may be deteriorated.

The present disclosure has been made to solve the above problems, and an object of the present disclosure is to obtain a target detection device capable of preventing deterioration of target detection performance even when compression processing of a reception signal is performed.

SOLUTION TO PROBLEM

A target detection device according to the present disclosure includes: a signal distribution unit to acquire a reception signal indicating a reflected wave of a pulse wave every time the pulse wave is emitted into space and divide a plurality of acquired reception signals; a plurality of signal compression units to compress respective reception signals after dividing by the signal distribution unit; and a plurality of signal recovery units to recover a delay time of a reception signal after compression by any one signal compression unit among the plurality of signal compression units and a complex amplitude of the reception signal after compression and output a recovery signal indicating the delay time and the complex amplitude. Further, the target detection device includes: a correlation processing unit to extract signal components correlated with each other from recovery signals output from the plurality of signal recovery units; and a target detection unit to detect a target on the basis of the signal components extracted by the correlation processing unit.

ADVANTAGEOUS EFFECTS OF INVENTION

According to the present disclosure, deterioration of target detection performance can be prevented even when compression processing of a reception signal is performed.

BRIEF DESCRIPTION OF DRAWINGS

FIG. 1 is a configuration diagram illustrating a target detection device 2 according to a first embodiment.

FIG. 2 is a hardware configuration diagram illustrating hardware of the target detection device 2 according to the first embodiment.

FIG. 3 is a hardware configuration diagram of a computer in a case where the target detection device 2 is implemented by software, firmware, or the like.

FIG. 4 is a flowchart illustrating a target detection method that is a processing procedure performed by the target detection device 2.

FIG. 5 is an explanatory diagram illustrating an example of a reflected wave received by a receiver 1.

FIG. 6A is an explanatory diagram illustrating a method (Method 1) of dividing a reception signal by the signal distribution unit 11, and FIG. 6B is an explanatory diagram illustrating a method (Method 2) of dividing a reception signal by the signal distribution unit 11.

FIG. 7 is a configuration diagram illustrating a target detection device 2 according to a second embodiment.

FIG. 8 is a hardware configuration diagram illustrating hardware of the target detection device 2 according to the second embodiment.

FIG. 9 is a configuration diagram illustrating a target detection device 2 according to a third embodiment.

FIG. 10 is a hardware configuration diagram illustrating hardware of the target detection device 2 according to the third embodiment.

FIG. 11 is an explanatory diagram illustrating an example of a recovery signal output from a signal recovery unit 13-n to a signal component extraction unit 18b-n and a recovery signal output from a signal replacement unit 18a to a signal component extraction unit 18b-n.

FIG. 12 is a configuration diagram illustrating a target detection device 2 according to a fourth embodiment.

FIG. 13 is a hardware configuration diagram illustrating hardware of the target detection device 2 according to the fourth embodiment.

FIG. 14 is a configuration diagram illustrating a target detection device 2 according to a fifth embodiment.

FIG. 15 is a hardware configuration diagram illustrating hardware of the target detection device 2 according to the fifth embodiment.

FIG. 16 is a configuration diagram illustrating a target detection device 2 according to a sixth embodiment.

FIG. 17 is a hardware configuration diagram illustrating hardware of the target detection device 2 according to the sixth embodiment.

## DESCRIPTION OF EMBODIMENTS

Hereinafter, in order to describe the present disclosure in more detail, modes for carrying out the present disclosure will be described with reference to the accompanying drawings.

First Embodiment

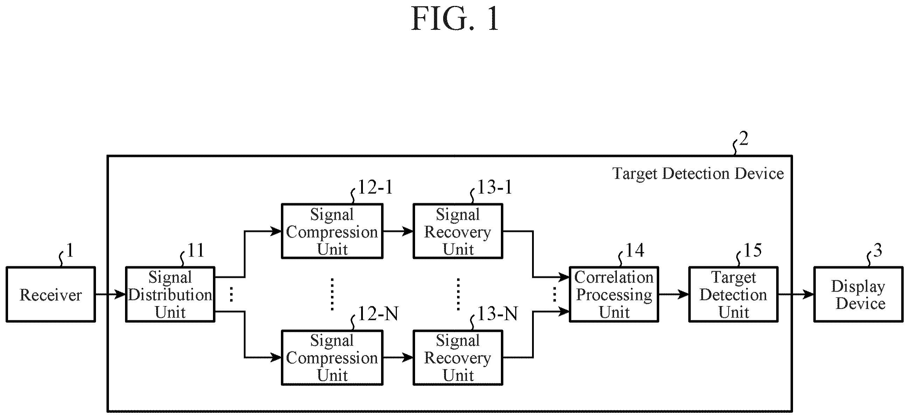

FIG. 1 is a configuration diagram illustrating a target detection device 2 according to a first embodiment.

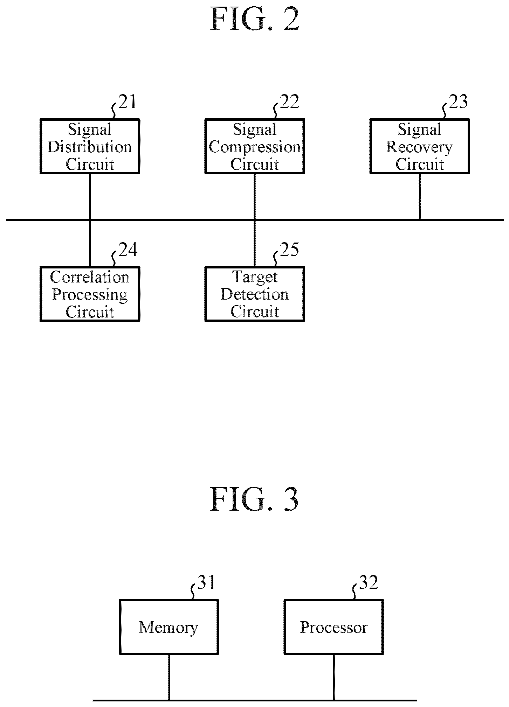

FIG. 2 is a hardware configuration diagram illustrating hardware of the target detection device 2 according to the first embodiment.

In FIG. 1, a receiver 1 receives a reflected wave that is a pulse wave reflected by a target or the like every time a pulse wave is emitted into space from a transmitter (not illustrated), and outputs a reception signal indicating the reflected wave to a target detection device 2.

The target detection device 2 acquires a reception signal indicating a reflected wave from the receiver 1, detects a target on the basis of the reception signal, and outputs a target detection result to a display device 3.

The display device 3 displays the target detection result output from the target detection device 2 on a display (not illustrated).

The target detection device 2 includes a signal distribution unit 11, signal compression units 12-1 to 12-N, signal recovery units 13-1 to 13-N, a correlation processing unit 14, and a target detection unit 15. N is an integer equal to or more than 2.

The signal distribution unit 11 is implemented by, for example, a signal distribution circuit 21 illustrated in FIG. 2.

The signal distribution unit 11 acquires a reception signal indicating a reflected wave from the receiver 1 every time a pulse wave is emitted into space from a transmitter (not illustrated).

The signal distribution unit 11 divides a plurality of acquired reception signals, and outputs each of divided reception signals to the signal compression unit 12-n (n = 1, ..., N).

The signal compression unit 12-n (n = 1, ..., N) is implemented by, for example, a signal compression circuit 22 illustrated in FIG. 2.

The signal compression unit 12-n acquires any one divided reception signal among a plurality of divided reception signals by the signal distribution unit 11.

The signal compression unit 12-n compresses a divided reception signal and outputs a reception signal after compression to the signal recovery unit 13-n.

The signal recovery unit 13-n (n = 1, ..., N) is implemented by, for example, a signal recovery circuit 23 illustrated in FIG. 2.

The signal recovery unit 13-n acquires the reception signal after compression from any one signal compression unit 12-n among the plurality of signal compression units 12-1 to 12-N.

The signal recovery unit 13-n recovers a delay time of the reception signal after compression and a complex amplitude of the reception signal after compression.

The signal recovery unit 13-n outputs a recovery signal indicating the delay time and the complex amplitude to the correlation processing unit 14.

The correlation processing unit 14 is implemented by, for example, a correlation processing circuit 24 illustrated in FIG. 2.

The correlation processing unit 14 acquires the recovery signal from each of the signal recovery units 13-1 to 13-N.

The correlation processing unit 14 extracts signal components correlated with each other from N recovery signals.

The correlation processing unit 14 outputs the signal components correlated with each other to the target detection unit 15.

The target detection unit 15 is implemented by, for example, a target detection circuit 25 illustrated in FIG. 2.

The target detection unit 15 acquires signal components correlated with each other from the correlation processing unit 14.

The target detection unit 15 detects a target on the basis of signal components correlated with each other.

The target detection unit 15 outputs a target detection result to the display device 3.

In FIG. 1, it is assumed that each of the signal distribution unit 11, the signal compression units 12-1 to 12-N, the signal recovery units 13-1 to 13-N, the correlation processing unit 14, and the target detection unit 15, which are components of the target detection device 2, is implemented by dedicated hardware as illustrated in FIG. 2. That is, it is assumed that the target detection device 2 is implemented by the signal distribution circuit 21, the signal compression circuit 22, the signal recovery circuit 23, the correlation processing circuit 24, and the target detection circuit 25.

Each of the signal distribution circuit 21, the signal compression circuit 22, the signal recovery circuit 23, the correlation processing circuit 24, and the target detection circuit 25 corresponds to, for example, a single circuit, a composite circuit, a programmed processor, a parallel-programmed processor, an ASIC (application specific integrated circuit), an FPGA (field-programmable gate array), or a combination thereof.

The components of the target detection device 2 are not limited to those implemented by dedicated hardware, and the target detection device 2 may be implemented by software, firmware, or a combination of software and firmware.

The software or firmware is stored in a memory of the computer as a program. The computer means hardware that executes a program, and corresponds to, for example, a central processing unit (CPU), a graphics processing unit (GPU), a central processing unit, a processing unit, an arithmetic unit, a microprocessor, a microcomputer, a processor, or a digital signal processor (DSP).

FIG. 3 is a hardware configuration diagram of a computer in a case where the target detection device 2 is implemented by software, firmware, or the like.

In a case where the target detection device 2 is implemented by software, firmware, or the like, a program for causing a computer to execute each processing procedure performed in the signal distribution unit 11, the signal compression units 12-1 to 12-N, the signal recovery unit 13-1 to 13-N, the correlation processing unit 14, and the target detection unit 15 is stored in the memory 31. Then, the processor 32 of the computer executes the program stored in the memory 31.

Further, FIG. 2 illustrates an example in which each of the components of the target detection device 2 is implemented by dedicated hardware, and FIG. 3 illustrates an example in which the target detection device 2 is implemented by software, firmware, or the like. However, this is merely an example, and some components in the target detection device 2 may be implemented by dedicated hardware, and the remaining components may be implemented by software, firmware, or the like.

Next, the operation of the target detection device 2 illustrated in FIG. 1 will be described.

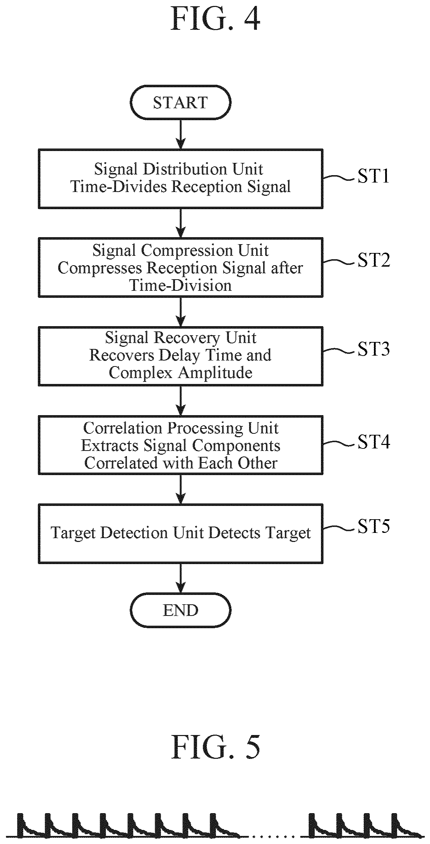

FIG. 4 is a flowchart illustrating a target detection method that is a processing procedure performed in the target detection device 2.

A transmitter (not illustrated) repeatedly emits a pulse wave into space.

The receiver 1 receives a reflected wave that is a pulse wave reflected by a target or the like every time a pulse wave is emitted from the transmitter into space.

FIG. 5 is an explanatory diagram illustrating an example of a reflected wave received by the receiver 1.

The receiver 1 includes an analog-to-digital converter (hereinafter, referred to as an "A/D converter".). The A/D converter converts a reception signal of a reflected wave which is an analog signal into a digital signal, and outputs the digital reception signal to the target detection device 2.

In order to prevent the amount of signal information included in the reception signal from being reduced along with the A/D conversion of the A/D converter, the sampling frequency of the A/D converter needs to be twice or more the signal bandwidth. Sampling of the A/D converter whose sampling frequency is twice or more the signal bandwidth is called Nyquist sampling. Therefore, the A/D converter included in the receiver 1 converts the reception signal of the reflected wave into a digital signal by Nyquist sampling.

In the target detection device 2 illustrated in FIG. 1, the receiver 1 includes an A/D converter. However, this is merely an example, and the A/D converter may be provided at an input stage of the signal distribution unit 11, may be provided at an input stage of the signal compression unit 12-n (n = 1, ..., N), or may be provided at an input stage of the signal recovery unit 13-n.

The signal distribution unit 11 of the target detection device 2 acquires a digital reception signal from the receiver 1 every time a pulse wave is emitted from the transmitter into space. The reception signal is a signal having sparsity. That is, most of the target components included in the reception signal are 0 values, and non-0 value target components are sparsely included in the reception signal. On the other hand, noise components included in the reception signal are evenly present in the reception signal.

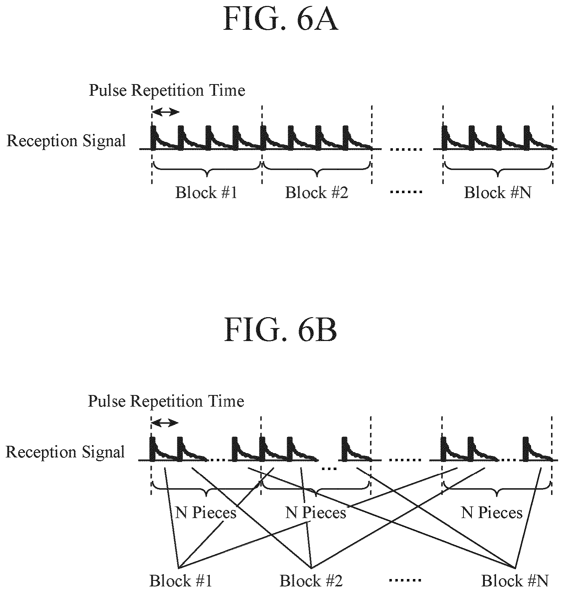

As illustrated in FIG. 6A, the signal distribution unit 11 time-divides the plurality of acquired reception signals (step ST1 in FIG. 4).

FIG. 6A is an explanatory diagram illustrating a method (method 1) of dividing a reception signal by the signal distribution unit 11.

In the example of FIG. 6A, the reception signal is time-divided into N blocks #1 to #N.

In the example of FIG. 6A, all the periods of the N blocks #1 to #N have the same length. Specifically, each of the periods of the N blocks #1 to #N is four pulse repetition times. However, this is merely an example, and the periods of the N blocks #1 to #N may have different lengths.

The signal distribution unit 11 outputs each of the N blocks #1 to #N, which are a plurality of reception signals after time division, to the signal compression unit 12-n (n = 1, ..., N).

When there is no significant change in the positional relationship between the target detection device 2 and the target between the start of the block #1 and the end of the block #N, each of the amplitude value of the target component in the signal and the phase change amount of the target component in the signal hardly changes between the start of the block #1 and the end of the block #N.

On the other hand, each of the amplitude value of the noise component and the phase change amount of the noise component randomly changes from the start of the block #1 to the end of the block #N. The noise component is, for example, a white noise component or a colored noise component.

Therefore, the correlation between the target components in the signals included in each of the N blocks #1 to #N is high. On the other hand, the correlation between the noise components included in each of the N blocks #1 to #N is low.

In the target detection device 2 illustrated in FIG. 1, the signal distribution unit 11 divides the plurality of acquired reception signals into N blocks #1 to #N as illustrated in FIG. 6A. However, this is merely an example, and the signal distribution unit 11 may divide the reception signal into N blocks #1 to #N as illustrated in FIG. 6B.

FIG. 6B is an explanatory diagram illustrating a method (Method 2) of dividing the reception signal by the signal distribution unit 11.

In the example of FIG. 6B, the block #1 includes the reception signal related to the $(N \times (i - 1) + 1)$-th pulse wave. i = 1, ..., N.

Further, the block #2 includes the reception signal related to the $(N \times (i - 1) + 2)$ th pulse wave, and the block #N includes the reception signal related to the $(N \times (i - 1) + N)$ th pulse wave.

The signal compression unit 12-n (n = 1, ..., N) acquires the block #n from the signal distribution unit 11 as a reception signal after time division.

The signal compression unit 12-n compresses the block #n in order to reduce the processing load on the subsequent stage of the signal compression unit 12-n (step ST2 in FIG. 4).

As a compression processing method of the block #n, for example, a method called compression sampling or sub-Nyquist sampling is used. The compression sampling and the like are compression processing methods on the premise that the reception signal is a sparse signal, and the compression sampling and the like are disclosed in, for example, Non Patent Literature 1. Since the compression processing of the block # itself is a known technique, detailed description thereof will be omitted.

The signal compression unit 12-n outputs the block #n after compression to the signal recovery unit 13-n.

The signal recovery unit 13-n (n = 1, ..., N) acquires the block #n after compression from the signal compression unit 12-n.

The signal recovery unit 13-n recovers the delay time of the block #n after compression and the complex amplitude of the block #n after compression (step ST3 in FIG. 4). The delay time is a time from emission of a pulse wave from the transmitter until reception of a reflected wave related to the block #n by the receiver.

As a method of recovering the delay time and the complex amplitude, for example, a convex optimization method or a greedy method is used. Each of the convex optimization method and the greedy method is disclosed in, for example, Non Patent Literature 2. Processing itself of recovering the delay time and the complex amplitude is a known technique, and thus detailed description thereof will be omitted.

Non Patent Literature 2:

A. Massa et al., "Compressive Sensing in Electromagnetics - A Review" IEEE Antennas and Propagation Magazine, vol. 57, no. 1, Feb. 2015, p. 224-238.

The signal recovery unit 13-n outputs a recovery signal indicating the delay time and the complex amplitude to the correlation processing unit 14.

The recovery signal indicating the delay time and the complex amplitude recovered by the signal recovery unit 13-n has a characteristic of having sparsity. In addition, a loss may occur in the complex amplitude value to be indicated by the recovery signal.

The correlation processing unit 14 acquires the recovery signal from each of the signal recovery units 13-1 to 13-N. The recovery signal is sparse in time. In other words, the recovery signal has a feature that the number of times having the non-zero value is small.

The correlation processing unit 14 extracts signal components correlated with each other from the N recovery signals (step ST4 in FIG. 4).

The signal components correlated with each other are likely to be highly correlated target components in the N blocks #1 to #N. Since the noise component has low correlation in the N blocks #1 to #N, there is a low possibility that the signal components correlated with each other include the noise component. Therefore, even when some loss occurs in the complex amplitude value of the target component recovered by the signal recovery unit 13-n, the noise component is further suppressed, so that the correlation processing unit 14 can improve the detection performance of the target component.

The correlation processing unit 14 outputs the signal components correlated with each other to the target detection unit 15.

Hereinafter, processing of extracting the target component by the correlation processing unit 14 will be specifically described.

Among the N recovery signals, signals having the same delay time are assumed to be $x_1$, $x_2$, ..., and $x_N$, respectively.

The correlation processing unit 14 performs discrete Fourier transform as illustrated in the following Formula (1) on the signals $x_1$, $x_2$, ..., $x_N$.

$$Y_q = \sum_{n=1}^{N} x_n e^{-j2\pi nq/NQ}, \qquad q = 1, 2, \cdots, Q \qquad (1)$$

The correlation processing unit 14 specifies a value $Y_{MAX}$ having the maximum amplitude value among the signals $Y_1$ to $Y_Q$ after the discrete Fourier transform.

The correlation processing unit 14 compares the maximum value $Y_{MAX}$ with a threshold value Th. The threshold value Th may be stored in an internal memory of the correlation processing unit 14 or may be given from the outside of the target detection device 2.

When the maximum value $Y_{MAX}$ is equal to or larger than the threshold value Th, the correlation processing unit 14 determines that the signals $x_1$, $x_2$, ..., $x_N$ are signal components correlated with each other.

When the maximum value $Y_{MAX}$ is less than the threshold value Th, the correlation processing unit 14 determines that the signals $x_1$, $x_2$, ..., $x_N$ are not signal components correlated with each other.

Even when a method of inserting a matched filter in a preceding stage of the A/D converter of the receiver 1 or a method of calculating a recovery signal by a multiple signal classification (MUSIC) method is used, a signal-to-noise ratio can be increased to reduce deterioration of target detection performance. However, in the case of using these methods, each of the circuit scale and the processing load becomes significantly larger as compared with the case of using the correlation processing unit 14. The reason is as follows. The circuit scale of the target detection device 2 is increased by inserting the matched filter in the preceding stage of the A/D converter. Since the MUSIC method requires processing with a large amount of calculation such as eigenvalue expansion, the circuit scale of the target detection device 2 increases. Compared to these, the correlation processing unit 14 performs simple correlation processing on only a small number of signal components, and thus has a small processing load.

The target detection unit 15 acquires signal components correlated with each other from the correlation processing unit 14.

The target detection unit 15 detects a target on the basis of signal components correlated with each other (step ST5 in FIG. 4).

Specifically, the target detection unit 15 performs amplitude detection of signal components correlated with each other, and compares the detected amplitude with a determination threshold value set so as to obtain a predetermined false alarm probability. The determination threshold value may be stored in an internal memory of the target detection unit 15 or may be given from the outside of the target detection device 2.

The target detection unit 15 detects the presence of the target when the detected amplitude is equal to or larger than the determination threshold value, and does not detect the presence of the target when the detected amplitude is less than the determination threshold value.

The target detection unit 15 outputs a target detection result to the display device 3 or a target information processing device (not illustrated).

The display device 3 displays the target detection result output from the target detection device 2 on a display (not illustrated).

The target information processing device (not illustrated) performs, for example, target tracking processing on the basis of the target detection result output from the target detection device 2.

In the first embodiment described above, the target detection device 2 is configured to include the signal distribution unit 11 to acquire a reception signal indicating a reflected wave of a pulse wave every time the pulse wave is emitted into space and divide a plurality of acquired reception signals, the plurality of signal compression units 12-1 to 12-N to compress respective reception signals after dividing by the signal distribution unit 11, and the plurality of signal recovery units 13-1 to 13-N to recover a delay time of a reception signal after compression by any one signal compression unit 12-n (n = 1, ..., N) among the plurality of signal compression units 12-1 to 12-N and a complex amplitude of the reception signal after compression and output a recovery signal indicating the delay time and the complex amplitude. Further, the target detection device 2 includes the correlation processing unit 14 to extract signal components correlated with each other from recovery signals output from the plurality of signal recovery units 13-1 to 13-N, and the target detection unit 15 to detect a target on the basis of the signal components extracted by the correlation processing unit 14. Therefore, the target detection device 2 can prevent deterioration of the target detection performance even when the compression processing of the reception signal is performed.

Second Embodiment

In a second embodiment, a target detection device 2 including a signal processing unit 16-n that suppresses a noise component included in a reception signal after compression by a signal compression unit 12-n (n = 1, ..., N) will be described.

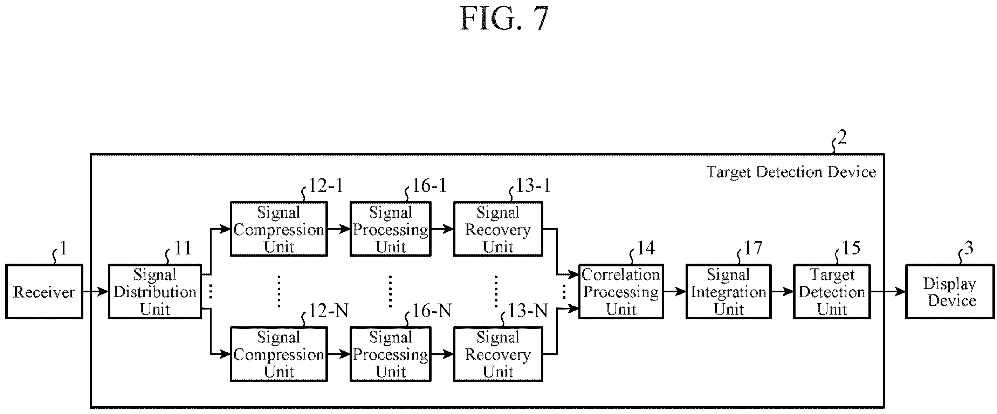

FIG. 7 is a configuration diagram illustrating the target detection device 2 according to the second embodiment. In FIG. 7, the same reference numerals as those in FIG. 1 denote the same or corresponding parts, and thus description thereof is omitted.

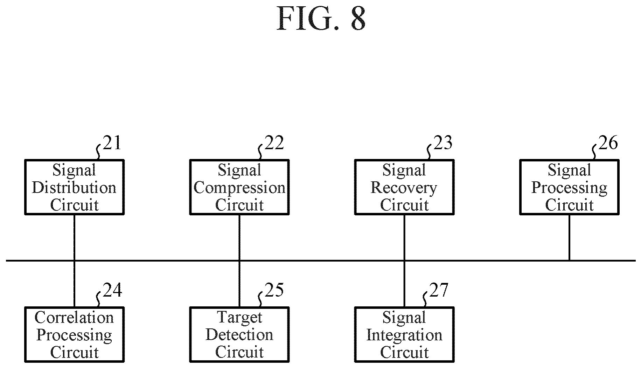

FIG. 8 is a hardware configuration diagram illustrating hardware of the target detection device 2 according to the second embodiment. In FIG. 8, the same reference numerals as those in FIG. 2 denote the same or corresponding parts, and thus description thereof is omitted.

The target detection device 2 illustrated in FIG. 7 includes a signal distribution unit 11, signal compression units 12-1 to 12-N, signal processing units 16-1 to 16-N, signal recovery units 13-1 to 13-N, a correlation processing unit 14, a signal integration unit 17, and a target detection unit 15.

The signal processing unit 16-n (n = 1, ..., N) is implemented by, for example, a signal processing circuit 26 illustrated in FIG. 8.

The signal processing unit 16-n acquires a reception signal after compression from any one signal compression unit 12-n among the plurality of signal compression units to 12-1 to 12-N.

The signal processing unit 16-n suppresses a noise component included in the reception signal after compression and outputs the reception signal after noise component suppression to the signal recovery unit 13-n.

The signal integration unit 17 is implemented by, for example, a signal integration circuit 27 illustrated in FIG. 8.

The signal integration unit 17 acquires signal components correlated with each other from the correlation processing unit 14 and accumulates the acquired signal components.

The signal integration unit 17 integrates a plurality of accumulated signal components.

The signal integration unit 17 outputs a signal component after integration to the target detection unit 15.

The target detection device 2 illustrated in FIG. 7 includes both the signal processing units 16-1 to 16-N and the signal integration unit 17. However, this is merely an example, and the target detection device 2 may include any one of the signal processing units 16-1 to 16-N or the signal integration unit 17.

In FIG. 7, it is assumed that each of the signal distribution unit 11, the signal compression units 12-1 to 12-N, the signal processing units 16-1 to 16-N, the signal recovery units 13-1 to 13-N, the correlation processing unit 14, the signal integration unit 17, and the target detection unit 15, which are components of the target detection device 2, is implemented by dedicated hardware as illustrated in FIG. 8. That is, it is assumed that the target detection device 2 is implemented by the signal distribution circuit 21, the signal compression circuit 22, the signal processing circuit 26, the signal recovery circuit 23, the correlation processing circuit 24, the signal integration circuit 27, and the target detection circuit 25.

Each of the signal distribution circuit 21, the signal compression circuit 22, the signal processing circuit 26, the signal recovery circuit 23, the correlation processing circuit 24, the signal integration circuit 27, and the target detection circuit 25 corresponds to, for example, a single circuit, a composite circuit, a programmed processor, a parallel-programmed processor, an ASIC, an FPGA, or a combination thereof.

The components of the target detection device 2 are not limited to those implemented by dedicated hardware, and the target detection device 2 may be implemented by software, firmware, or a combination of software and firmware.

In a case where the target detection device 2 is implemented by software, firmware, or the like, a program for causing a computer to execute each processing procedure performed in the signal distribution unit 11, the signal compression units 12-1 to 12-N, the signal processing units 16-1 to 16-N, the signal recovery units 13-1 to 13-N, the correlation processing unit 14, the signal integration unit 17, and the target detection unit 15 is stored in the memory 31 illustrated in FIG. 3. Then, the processor 32 illustrated in FIG. 3 executes the program stored in the memory 31.

Further, FIG. 8 illustrates an example in which each of the components of the target detection device 2 is implemented by dedicated hardware, and FIG. 3 illustrates an example in which the target detection device 2 is implemented by software, firmware, or the like. However, this is merely an example, and some components in the target detection device 2 may be implemented by dedicated hardware, and the remaining components may be implemented by software, firmware, or the like.

Next, the operation of the target detection device 2 illustrated in FIG. 7 will be described. Here, the operation is similar to that of the target detection device 2 illustrated in FIG. 1 except for the signal processing units 16-1 to 16-N and the signal integration unit 17. Thus, here, the operations of the signal processing units 16-1 to 16-N and the signal integration unit 17 will be mainly described.

The target detection device 2 illustrated in FIG. 7 includes the signal processing units 16-1 to 16-N and the signal integration unit 17 in order to further suppress a noise component and enhance target detection performance as compared with the target detection device 2 illustrated in FIG. 1.

The signal processing unit 16-n (n = 1, ..., N) acquires the reception signal after compression from the signal compression unit 12-n.

The signal processing unit 16-n performs processing of suppressing a noise component included in the reception signal after compression.

The signal processing unit 16-n outputs the reception signal after noise component suppression to the signal recovery unit 13-n.

Examples of the processing of suppressing the noise component by the signal processing unit 16-n include coherent integration processing, clutter suppression processing, beam forming processing, and sidelobe canceller processing.

The coherent integration processing is processing described below. Here, the coherent integration processing itself is a known technique, and thus will be briefly described.

The signal processing unit 16-n (n = 1, ..., N) acquires the block #n from the signal compression unit 12-n.

Assuming that the block #n includes K signals and the K signals are represented by $x_{n,1}$, ..., $x_{n,K}$, the signal processing unit 16-n acquires signals having the same delay time from each of the K signals $x_{n,1}$, $x_{n,2}$, ..., $x_{n,K}$. K is an integer equal to or more than 2. The delay time is a time from the emission of the pulse wave from the transmitter until the reception of the reflected wave related to the signal included in the block #n by the receiver.

The signal processing unit 16-n performs coherent integration expressed by the following Formula (2) on the K signals $x_{n,1}$, $x_{n,2}$, ..., $x_{n,K}$.

The signal processing unit 16-n outputs an integration result $G_h$ to the signal recovery unit 13-n as the block #n after noise component suppression.

$$G_h = \sum_{k=1}^{K} x_{n,k} e^{-j2\pi kh/KM}, \quad h = 1, 2, \cdots, H \quad (2)$$

The clutter suppression processing is, for example, processing of suppressing a noise component included in a reception signal after compression using a difference between a target Doppler frequency and a noise Doppler frequency, such as known moving target indicator (MTI) processing or known pulse Doppler processing. The MTI processing is processing of extracting a velocity component by removing a fixed component having no velocity by taking a difference between signals received at certain time intervals.

The beam forming processing is a process described below. Here, since the beam forming processing itself is a known technique, the beam forming processing will be briefly described.

The signal processing unit 16-n performs coherent integration expressed by the following Formula (3) on the reception signals $x_1'$, $x_2'$, ..., and $x_M'$ indicating reflected waves received by M antennas arranged at equal intervals in the spatial coordinates zi, Z2, ..., ZM.

The signal processing unit 16-n outputs the integration result G to the signal recovery unit 13-n as the reception signal after noise component suppression.

$$G = \sum_{m=1}^{M} x_m' e^{-j2\pi z_m \sin\theta/\lambda} \qquad (3)$$

In Formula (3), $\lambda$ is a wavelength. $\theta$ is a direction in which a beam is formed by the beam forming processing.

Therefore, an unnecessary signal from a direction other than $\theta$ is suppressed by the beam forming processing.

The sidelobe canceller processing is known processing of suppressing an interference signal incident from a side lobe direction of a main antenna by performing correlation processing between a reception signal by the main antenna and a reception signal by an auxiliary antenna when the auxiliary antenna is provided in addition to the main antenna.

The signal recovery unit 13-n (n = 1, ..., N) acquires the block #n after noise component suppression from the signal processing unit 16-n.

The signal recovery unit 13-n recovers the delay time of the block #n after noise component suppression and the complex amplitude of the block #n after the noise component suppression.

Every time signal components correlated with each other are output from the correlation processing unit 14, the signal integration unit 17 acquires the signal components and accumulates the signal components. The signal components accumulated in the signal integration unit 17 are signal components at a plurality of different times.

The signal integration unit 17 integrates signal components at a plurality of different times, and outputs the signal components after integration to the target detection unit 15.

Since the target components at a plurality of different times have high correlation, the target components are accumulated by the signal integration unit 17.

On the other hand, noise components at a plurality of different times have low correlation and thus are hardly accumulated by the signal integration unit 17.

Therefore, the signal integration unit 17 integrates signal components at a plurality of different times, thereby improving signal-to-noise.

The target detection unit 15 acquires a signal component after integration from the signal integration unit 17.

The target detection unit 15 detects a target on the basis of the signal component after integration.

In the second embodiment described above, the target detection device 2 illustrated in FIG. 7 is configured to include the plurality of signal processing units 16-1 to 16-N to suppress a noise component included in a reception signal after compression by any one signal compression unit 12-n (n = 1, ..., N) among the plurality of signal compression units 12-1 to 12-N, in which each signal recovery unit 13-n recovers a delay time of a reception signal after noise component suppression by any one signal processing unit 16-n among the signal processing units 16-1 to 16-N and a complex amplitude of the reception signal after noise component suppression, and outputs a recovery signal indicating the delay time and the complex amplitude to the correlation processing unit 14. Therefore, similarly to the target detection device 2 illustrated in FIG. 1, the target detection device 2 illustrated in FIG. 7 can prevent deterioration of the target detection performance and can enhance the target detection performance more than the target detection device 2 illustrated in FIG. 1, even when the compression processing of the reception signal is performed. Furthermore, since the signal processing units 16-1 to 16-N performs processing on the compressed signal, the processing load of the target detection device 2 is greatly reduced as compared with the processing load of a general target detection device that performs signal processing without including the signal compression unit.

Further, in the second embodiment, the target detection device 2 illustrated in FIG. 7 is configured in such a manner that the signal integration unit 17 to accumulate signal components extracted by the correlation processing unit 14 and integrates a plurality of signal components is provided, and the target detection unit 15 detects a target on the basis of the signal components after integration by the signal integration unit 17. Therefore, similarly to the target detection device 2 illustrated in FIG. 1, the target detection device 2 illustrated in FIG. 7 can prevent deterioration of the target detection performance and can enhance the target detection performance more than the target detection device 2 illustrated in FIG. 1, even when the compression processing of the reception signal is performed.

Third Embodiment

In a third embodiment, a target detection device 2 in which a correlation processing unit 18 includes a signal replacement unit 18a, signal component extraction units 18b-1 to 18b-N, and a signal integration unit 18c will be described.

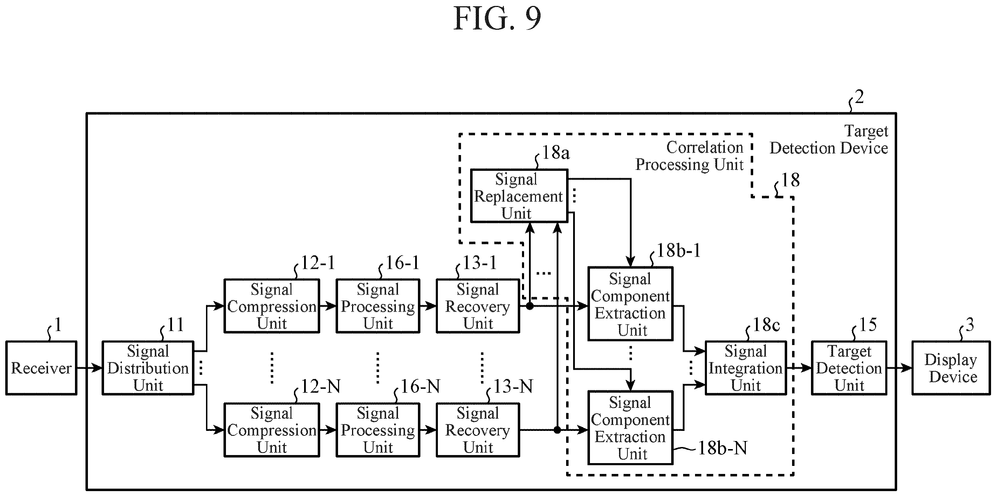

FIG. 9 is a configuration diagram illustrating the target detection device 2 according to the third embodiment. In FIG. 9, the same reference numerals as those in FIGS. 1 and 7 denote the same or corresponding parts, and thus description thereof is omitted.

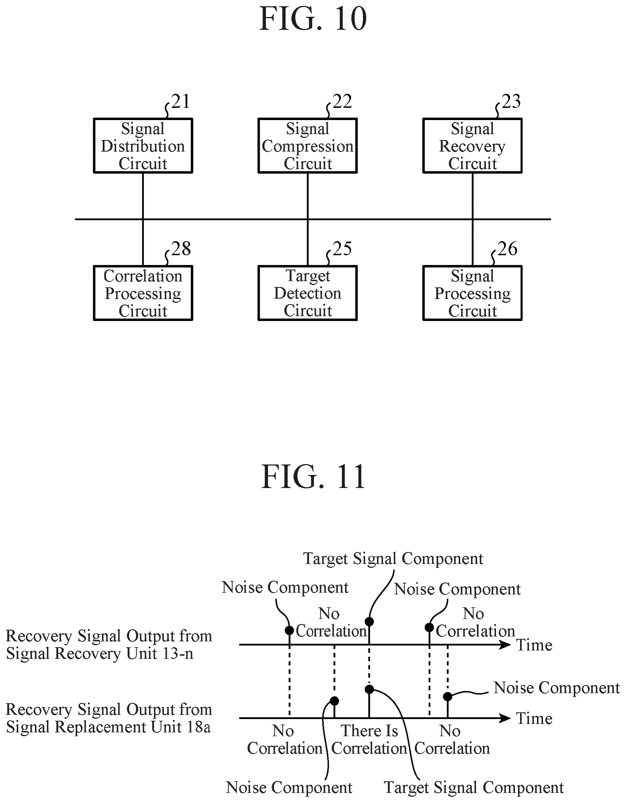

FIG. 10 is a hardware configuration diagram illustrating hardware of the target detection device 2 according to the third embodiment. In FIG. 10, the same reference numerals as those in FIGS. 2 and 8 denote the same or corresponding parts, and thus description thereof is omitted.

The target detection device 2 illustrated in FIG. 9 includes a signal distribution unit 11, signal compression units 12-1 to 12-N, signal processing units 16-1 to 16-N, signal recovery units 13-1 to 13-N, a correlation processing unit 18, and a target detection unit 15. Here, this is merely an example, and the target detection device 2 may or may not include the signal processing units 16-1 to 16-N.

The correlation processing unit 18 is implemented by, for example, the correlation processing circuit 28 illustrated in FIG. 10.

The correlation processing unit 18 includes the signal replacement unit 18a, the signal component extraction units 18b-1 to 18b-N, and the signal integration unit 18c.

The correlation processing unit 18 illustrated in FIG. 9 extracts signal components correlated with each other by a simpler method than that of the correlation processing unit 14 illustrated in FIG. 1.

The signal replacement unit 18a acquires a recovery signal from each of the signal recovery units 13-1 to 13-N.

The signal replacement unit 18a replaces a plurality of recovery signals.

The signal replacement unit 18a outputs recovery signals after replacement to the signal component extraction unit 18b-n (n = 1, ..., N).

The signal component extraction unit 18b-n (n = 1, ..., N) acquires the recovery signal output from any one signal recovery unit 13-n among the plurality of signal recovery units to 13-1 to 13-N, and acquires one recovery signal among the plurality of recovery signals after replacement from the signal replacement unit 18a.

The signal component extraction unit 18b-n extracts signal components correlated with each other from the recovery signal acquired from the signal recovery unit 13-n and the recovery signal after replacement acquired from the signal replacement unit 18a.

The signal component extraction unit 18b-n outputs the signal components correlated with each other to the signal integration unit 18c.

The signal integration unit 18c acquires signal components correlated with each other from each of the signal component extraction units 18b-1 to 18b-N.

The signal integration unit 18c integrates a plurality of acquired signal components and outputs a signal component after integration to the target detection unit 15.

In FIG. 9, it is assumed that each of the signal distribution unit 11, the signal compression units 12-1 to 12-N, the signal processing units 16-1 to 16-N, the signal recovery units 13-1 to 13-N, the correlation processing unit 18, and the target detection unit 15, which are components of the target detection device 2, is implemented by dedicated hardware as illustrated in FIG. 10. That is, it is assumed that the target detection device 2 is implemented by the signal distribution circuit 21, the signal compression circuit 22, the signal processing circuit 26, the signal recovery circuit 23, the correlation processing circuit 28, and the target detection circuit 25.

Each of the signal distribution circuit 21, the signal compression circuit 22, the signal processing circuit 26, the signal recovery circuit 23, the correlation processing circuit 28, and the target detection circuit 25 corresponds to, for example, a single circuit, a composite circuit, a programmed processor, a parallel-programmed processor, an ASIC, an FPGA, or a combination thereof.

The components of the target detection device 2 are not limited to those implemented by dedicated hardware, and the target detection device 2 may be implemented by software, firmware, or a combination of software and firmware.

In a case where the target detection device 2 is implemented by software, firmware, or the like, a program for causing a computer to execute each processing procedure performed in the signal distribution unit 11, the signal compression units 12-1 to 12-N, the signal processing units 16-1 to 16-N, the signal recovery units 13-1 to 13-N, the correlation processing unit 18, and the target detection unit 15 is stored in the memory 31 illustrated in FIG. 3. Then, the processor 32 illustrated in FIG. 3 executes the program stored in the memory 31.

Further, FIG. 10 illustrates an example in which each of the components of the target detection device 2 is implemented by dedicated hardware, and FIG. 3 illustrates an example in which the target detection device 2 is implemented by software, firmware, or the like. However, this is merely an example, and some components in the target detection device 2 may be implemented by dedicated hardware, and the remaining components may be implemented by software, firmware, or the like.

Next, the operation of the target detection device 2 illustrated in FIG. 9 will be described. Here, the operation is similar to that of the target detection device 2 illustrated in FIG. 7 except for the correlation processing unit 18. Thus, here, the operation of the correlation processing unit 18 will be mainly described.

The signal replacement unit 18a of the correlation processing unit 18 acquires a recovery signal from each of the signal recovery units 13-1 to 13-N and accumulates a plurality of recovery signals. The plurality of recovery signals accumulated by the signal replacement unit 18a is recovery signals of N blocks #1 to #N.

The signal replacement unit 18a replaces the recovery signals of the N blocks #1 to #N.

Specifically, the signal replacement unit 18a replaces the recovery signals of the N blocks #1 to #N in such a manner that a recovery signal of a block different from the recovery signal of the block #n output from the signal recovery unit 13-n to the signal component extraction unit 18b-n is output from the signal replacement unit 18a to the signal component extraction unit 18b-n.

For example, when the recovery signal output from the signal recovery unit 13-n to the signal component extraction unit 18b-n is a recovery signal of the following block, the signal replacement unit 18a replaces the recovery signals of the N blocks #1 to #N in such a manner that the recovery signal of the following block is output from the signal replacement unit 18a to the signal component extraction unit 18b-n.

- Signal recovery unit 13-1 → signal component extraction unit 18b-1: recovery signal of block #1
- Signal recovery unit 13-2 → signal component extraction unit 18b-2: recovery signal of block #2
  :
- Signal recovery unit 13-N → signal component extraction unit 18b-N: recovery signal of block #N
- Signal replacement unit 18a → signal component extraction unit 18b-1: recovery signal of block #(N-1)
- Signal replacement unit 18a → signal component extraction unit 18b-2: recovery signal of block #N
  :
- Signal replacement unit 18a → signal component extraction unit 18b-N: recovery signal of block #2

FIG. 11 is an explanatory diagram illustrating an example of the recovery signal output from the signal recovery unit 13-n to the signal component extraction unit 18b-n and the recovery signal output from the signal replacement unit 18a to the signal component extraction unit 18b-n. These recovery signals have sparsity.

In the example of FIG. 11, target components are included in the respective recovery signals, and the target components are temporally correlated with each other.

Further, in the example of FIG. 11, noise components are included in respective recovery signals, and the noise components are not temporally correlated with each other.

Note that a recovery signal of a block different from the recovery signal of the block #n output from the signal recovery unit 13-n to the signal component extraction unit 18b-n only needs to be output from the signal replacement unit 18a to the signal component extraction unit 18b-n, and a replacement order of the recovery signals of the N blocks #1 to #N by the signal replacement unit 18a is any order.

The signal replacement unit 18a outputs the recovery signal after replacement to the signal component extraction unit 18b-n.

The signal component extraction unit 18b-n (n = 1, ..., N) acquires the recovery signal of the block #n from the signal recovery unit 13-n.

The signal component extraction unit 18b-n acquires a recovery signal after replacement, which is a recovery signal of a block different from the block #n, from the signal replacement unit 18a.

The signal component extraction unit 18b-n extracts signal components temporally correlated with each other from the recovery signal from the signal recovery unit 13-n and the recovery signal after replacement.

Processing of extracting the signal components temporally correlated with each other by the signal component extraction unit 18b-n is similar to the processing of extracting the signal component by the correlation processing unit 14 illustrated in FIG. 1 in the case of N = 2.

The signal component extraction unit 18b-n outputs the signal components correlated with each other to the signal integration unit 18c.

The signal integration unit 18c acquires signal components temporally correlated with each other from each of the signal component extraction units 18b-1 to 18b-N.

The signal integration unit 18c integrates the acquired N signal components and outputs the signal components after integration to the target detection unit 15.

The target detection unit 15 acquires a signal component after integration from the signal integration unit 18c.

The target detection unit 15 detects a target on the basis of the signal component after integration.

In the third embodiment described above, the target detection device 2 illustrated in FIG. 9 is configured in such a manner that the correlation processing unit 18 includes the signal replacement unit 18a to acquire recovery signals from the plurality of signal recovery units 13-1 to 13-N and replace the plurality of recovery signals, the plurality of signal component extraction units 18b-1 to 18b-N to extract signal components correlated with each other from a recovery signal output from any one signal recovery unit 13-n (n=1, ..., N) among the plurality of signal recovery units 13-1 to 13-N and one recovery signal among a plurality of recovery signals after replacement by the signal replacement unit 18a, and the signal integration unit 18c to integrate the signal components extracted by the plurality of signal component extraction units 18b-1 to 18b-N. Further, the target detection unit 15 of the target detection device 2 illustrated in FIG. 9 detects a target on the basis of the signal components after integration by the signal integration unit 18c. Therefore, similarly to the target detection device 2 illustrated in FIG. 1, the target detection device 2 illustrated in FIG. 9 can prevent the degradation of the target detection performance and suppress the noise component by a simple method, even when the compression processing of the reception signal is performed.

Fourth Embodiment

In a fourth embodiment, a target detection device 2 in which a correlation processing unit 19 includes a signal component determination unit 19a and a signal integration unit 19b will be described.

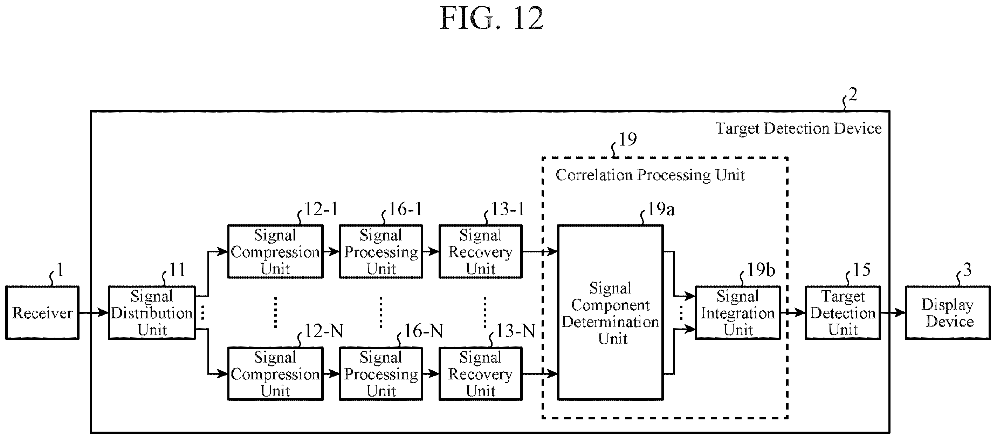

FIG. 12 is a configuration diagram illustrating the target detection device 2 according to the fourth embodiment. In FIG. 12, the same reference numerals as those in FIGS. 1, 7, and 9 denote the same or corresponding parts, and thus description thereof is omitted.

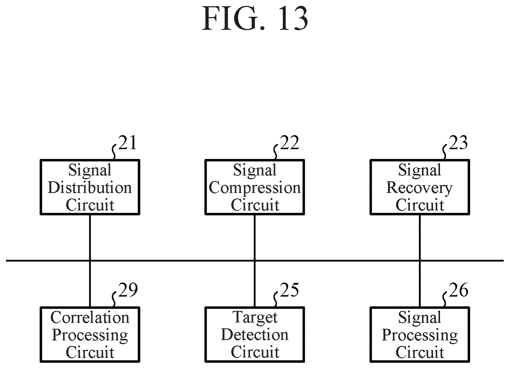

FIG. 13 is a hardware configuration diagram illustrating hardware of the target detection device 2 according to the fourth embodiment. In FIG. 13, the same reference numerals as those in FIGS. 2, 8, and 10 denote the same or corresponding parts, and thus description thereof is omitted.

The target detection device 2 illustrated in FIG. 12 includes a signal distribution unit 11, signal compression units 12-1 to 12-N, signal processing units 16-1 to 16-N, signal recovery units 13-1 to 13-N, the correlation processing unit 19, and a target detection unit 15. Here, this is merely an example, and the target detection device 2 may or may not include the signal processing units 16-1 to 16-N.

The correlation processing unit 19 is implemented by, for example, a correlation processing circuit 29 illustrated in FIG. 13.

The correlation processing unit 19 includes the signal component determination unit 19a and the signal integration unit 19b.

The correlation processing unit 19 illustrated in FIG. 12 extracts signal components correlated with each other by a simpler method than that of the correlation processing unit 14 illustrated in FIG. 1.

The signal component determination unit 19a acquires a recovery signal from each of the signal recovery units 13-1 to 13-N.

The signal component determination unit 19a outputs N recovery signals to the signal integration unit 19b when the number of recovery signals having a signal component having a non-zero value is equal to or larger than a threshold value among the N recovery signals.

When the number of recovery signals having the signal component having a non-zero value is less than the threshold value among the N recovery signals, the signal component determination unit 19a outputs the recovery signal having only the signal component having a zero value to the signal integration unit 19b instead of each recovery signal.

The signal integration unit 19b acquires N recovery signals from the signal component determination unit 19a.

The signal integration unit 19b integrates the N recovery signals, and outputs a recovery signal after integration to the target detection unit 15.

In FIG. 12, it is assumed that each of the signal distribution unit 11, the signal compression units 12-1 to 12-N, the signal processing units 16-1 to 16-N, the signal recovery units 13-1 to 13-N, the correlation processing unit 19, and the target detection unit 15, which are components of the target detection device 2, is implemented by dedicated hardware as illustrated in FIG. 13. That is, it is assumed that the target detection device 2 is implemented by the signal distribution circuit 21, the signal compression circuit 22, the signal processing circuit 26, the signal recovery circuit 23, the correlation processing circuit 29, and the target detection circuit 25.

Each of the signal distribution circuit 21, the signal compression circuit 22, the signal processing circuit 26, the signal recovery circuit 23, the correlation processing circuit 29, and the target detection circuit 25 corresponds to, for example, a single circuit, a composite circuit, a programmed processor, a parallel-programmed processor, an ASIC, an FPGA, or a combination thereof.

The components of the target detection device 2 are not limited to those implemented by dedicated hardware, and the target detection device 2 may be implemented by software, firmware, or a combination of software and firmware.

In a case where the target detection device 2 is implemented by software, firmware, or the like, a program for causing a computer to execute each processing procedure performed in the signal distribution unit 11, the signal compression units 12-1 to 12-N, the signal processing units 16-1 to 16-N, the signal recovery units 13-1 to 13-N, the correlation processing unit 19, and the target detection unit 15 is stored in the memory 31 illustrated in FIG. 3. Then, the processor 32 illustrated in FIG. 3 executes the program stored in the memory 31.

Further, FIG. 13 illustrates an example in which each of the components of the target detection device 2 is implemented by dedicated hardware, and FIG. 3 illustrates an example in which the target detection device 2 is implemented by software, firmware, or the like. However, this is merely an example, and some components in the target detection device 2 may be implemented by dedicated hardware, and the remaining components may be implemented by software, firmware, or the like.

Next, the operation of the target detection device 2 illustrated in FIG. 12 will be described. Here, the operation is similar to that of the target detection device 2 illustrated in FIG. 7 except for the correlation processing unit 19. Thus, here, the operation of the correlation processing unit 19 will be mainly described.

The signal component determination unit 19a of the correlation processing unit 19 acquires the recovery signal from each of the signal recovery units 13-1 to 13-N. These recovery signals have sparsity. That is, most of the plurality of signal components included in the recovery signal are zero values, and a signal component having a non-zero value is sparsely included in the recovery signal.

The signal component determination unit 19a checks whether or not a signal component having a non-zero value is included in each recovery signal.

The signal component determination unit 19a outputs N recovery signals to the signal integration unit 19b when the number of recovery signals having a signal component having a non-zero value among the N recovery signals is equal to or larger than a threshold value Thsv. The threshold value Thsv may be stored in an internal memory of the signal component determination unit 19a or may be given from the outside of the target detection device 2.

When the number of recovery signals having a signal component having a non-zero value is less than the threshold value Thsv among the N recovery signals, the signal component determination unit 19a outputs a recovery signal having only a signal component having a zero value to the signal integration unit 19b instead of each recovery signal.

The signal integration unit 19b acquires N recovery signals from the signal component determination unit 19a.

The signal integration unit 19b integrates the N recovery signals, and outputs a recovery signal after integration to the target detection unit 15.

Since the correlation of the delay time and the correlation of the complex amplitude are high, the target components included in the N recovery signals are accumulated by the signal integration unit 19b.

On the other hand, the noise components included in the N recovery signals are hardly accumulated by the signal integration unit 19b because the correlation of the delay time and the correlation of the complex amplitude are low.

Therefore, the noise component is suppressed by integrating the N recovery signals by the signal integration unit 19b. As a result, an effect of improving the target detection performance equivalent to that of improving the signal-to-noise is obtained.

The target detection unit 15 acquires a signal component after integration from the signal integration unit 19b.

The target detection unit 15 detects a target on the basis of the signal component after integration.

In the above-described fourth embodiment, the target detection device 2 illustrated in FIG. 12 is configured in such a manner that the correlation processing unit 19 includes the signal component determination unit 19a to output the plurality of recovery signals when the number of recovery signals having a signal component having a non-zero value is equal to or larger than a threshold value among recovery signals output from the plurality of signal recovery units 13-1 to 13-N, and output a recovery signal having only a signal component having a zero value as respective recovery signals when the number of recovery signals having a signal component having a non-zero value is less than the threshold value, and the signal integration unit 19b to integrate the plurality of recovery signals output from the signal component determination unit 19a. Further, the target detection unit 15 of the target detection device 2 illustrated in FIG. 12 detects a target on the basis of the recovery signal after integration by the signal integration unit 19b. Therefore, similarly to the target detection device 2 illustrated in FIG. 1, the target detection device 2 illustrated in FIG. 12 can prevent the degradation of the target detection performance and suppress the noise component by a simple method, even when the compression processing of the reception signal is performed.

Fifth Embodiment

In a fifth embodiment, a target detection device 2 in which a correlation processing unit 41 includes a correlation value calculation unit 41a, signal component extraction units 41b-1 to 41b-N, and a signal integration unit 41c will be described.

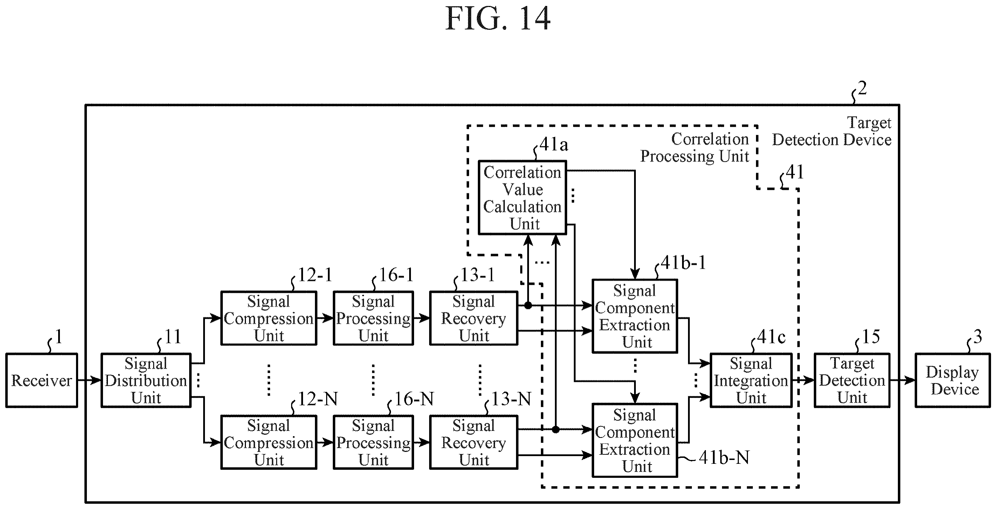

FIG. 14 is a configuration diagram illustrating the target detection device 2 according to the fifth embodiment. In FIG. 14, the same reference numerals as those in FIGS. 1, 7, 9, and 12 denote the same or corresponding parts, and thus description thereof is omitted.

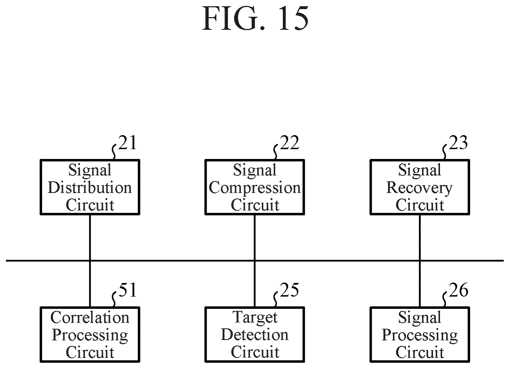

FIG. 15 is a hardware configuration diagram illustrating hardware of the target detection device 2 according to the fifth embodiment. In FIG. 15, the same reference numerals as those in FIGS. 2, 8, 10, and 13 denote the same or corresponding parts, and thus description thereof is omitted.

The target detection device 2 illustrated in FIG. 14 includes a signal distribution unit 11, signal compression units 12-1 to 12-N, signal processing units 16-1 to 16-N, signal recovery units 13-1 to 13-N, the correlation processing unit 41, and a target detection unit 15. Here, this is merely an example, and the target detection device 2 may or may not include the signal processing units 16-1 to 16-N.

The correlation processing unit 41 is implemented by, for example, a correlation processing circuit 51 illustrated in FIG. 15.

The correlation processing unit 41 includes the correlation value calculation unit 41a, the signal component extraction units 41b-1 to 41b-N, and the signal integration unit 41c.

The correlation processing unit 41 illustrated in FIG. 14 extracts signal components correlated with each other by a simpler method than that of the correlation processing unit 14 illustrated in FIG. 1.

The correlation value calculation unit 41a acquires a recovery signal from each of the signal recovery units 13-1 to 13-N.

The correlation value calculation unit 41a detects a time at which a signal component having a non-zero value is included in each recovery signal.

The correlation value calculation unit 41a calculates a correlation value between times detected from each of the N recovery signals.

The signal component extraction unit 41b-n (n = 1, ..., N) acquires the recovery signal from the signal recovery unit 13-n.

The signal component extraction unit 41b-n extracts a signal component at a time when the correlation value calculated by the correlation value calculation unit 41a is equal to or larger than a threshold value from the recovery signal.

The signal component extraction unit 41b-n outputs the extracted signal component to the signal integration unit 41c.

The signal integration unit 41c acquires a signal component from each of the signal component extraction units 41b-1 to 41b-N.

The signal integration unit 41c integrates a plurality of signal components and outputs a signal component after integration to the target detection unit 15.

In FIG. 14, it is assumed that each of the signal distribution unit 11, the signal compression units 12-1 to 12-N, the signal processing units 16-1 to 16-N, the signal recovery units 13-1 to 13-N, the correlation processing unit 41, and the target detection unit 15, which are components of the target detection device 2, is implemented by dedicated hardware as illustrated in FIG. 15. That is, it is assumed that the target detection device 2 is implemented by the signal distribution circuit 21, the signal compression circuit 22, the signal processing circuit 26, the signal recovery circuit 23, the correlation processing circuit 51, and the target detection circuit 25.

Each of the signal distribution circuit 21, the signal compression circuit 22, the signal processing circuit 26, the signal recovery circuit 23, the correlation processing circuit 51, and the target detection circuit 25 corresponds to, for example, a single circuit, a composite circuit, a programmed processor, a parallel-programmed processor, an ASIC, an FPGA, or a combination thereof.

The components of the target detection device 2 are not limited to those implemented by dedicated hardware, and the target detection device 2 may be implemented by software, firmware, or a combination of software and firmware.

In a case where the target detection device 2 is implemented by software, firmware, or the like, a program for causing a computer to execute each processing procedure performed in the signal distribution unit 11, the signal compression units 12-1 to 12-N, the signal processing units 16-1 to 16-N, the signal recovery units 13-1 to 13-N, the correlation processing unit 41, and the target detection unit 15 is stored in the memory 31 illustrated in FIG. 3. Then, the processor 32 illustrated in FIG. 3 executes the program stored in the memory 31.

Further, FIG. 15 illustrates an example in which each of the components of the target detection device 2 is implemented by dedicated hardware, and FIG. 3 illustrates an example in which the target detection device 2 is implemented by software, firmware, or the like. However, this is merely an example, and some components in the target detection device 2 may be implemented by dedicated hardware, and the remaining components may be implemented by software, firmware, or the like.

Next, the operation of the target detection device 2 illustrated in FIG. 14 will be described. Here, the operation is similar to that of the target detection device 2 illustrated in FIG. 7 except for the correlation processing unit 41. Thus, here, the operation of the correlation processing unit 41 will be mainly described.

The correlation value calculation unit 41a of the correlation processing unit 41 acquires the recovery signal from the signal recovery unit 13-n (n = 1, ..., N).

The correlation value calculation unit 41a detects a time at which a signal component having a non-zero value is included in the recovery signal.

The correlation value calculation unit 41a calculates a correlation value C between times detected from each of the N recovery signals.

The correlation value calculation unit 41a outputs the correlation value C to each of the signal component extraction units 41b-1 to 41b-N.

Hereinafter, the calculation processing of the correlation value C by the correlation value calculation unit 41a will be specifically described.

For example, it is assumed that the time at which the signal component having a non-zero value is included in the signal recovery unit 13-1 is $t_{1,p}$, the time at which the signal component having a non-zero value is included in the signal recovery unit 13-2 is $t_{2,q}$, and the time at which the signal component having a non-zero value is included in the signal recovery unit 13-N is $t_{N,r}$. Each of p, q, and r is an integer equal to or more than 1.

In this case, the correlation value calculation unit 41a calculates a correlation value C between the time $t_{1,p}$, the time $t_{2,q}$, and the time $t_{N,r}$. Although the calculation processing of the correlation value C itself is a known technique and thus detailed description thereof is omitted, for example, the correlation value C has a larger value as each of the time difference between the time $t_{1,p}$ and the time $t_{2,q}$, the time difference between the time $t_{2,q}$ and the time $t_{N,r}$, and the time difference between the time $t_{N,r}$ and the time $t_{1,p}$ is smaller.

The signal component extraction unit 41b-n (n = 1, ..., N) acquires the recovery signal from the signal recovery unit 13-n and acquires the correlation value C from the correlation value calculation unit 41a.

The signal component extraction unit 41b-n extracts a signal component at a time when the correlation value C is equal to or larger than a threshold value The from the recovery signal. The threshold value The may be stored in an internal memory of the signal component extraction unit 41b-n or may be given from the outside of the target detection device 2.

For example, when the time at which the signal component having a non-zero value is included is $t_{1,1}, t_{1,2}, ...$, and the time at which the correlation value C is equal to or larger than the threshold value The is the time $t_{1,p}$, the signal component extraction unit 41b-1 extracts the signal component at the time $t_{1,p}$ from the recovery signal.

For example, when the time at which the signal component having a non-zero value is included is $t_{2,1}, t_{2,2}, ...$, and the time at which the correlation value C is equal to or larger than the threshold value The is the time $t_{2,q}$, the signal component extraction unit 41b-2 extracts the signal component at the time $t_{2,q}$ from the recovery signal.

For example, when the time at which the signal component having a non-zero value is included is $t_{N,1}, t_{N,2}, ...$, and the time at which the correlation value C is equal to or larger than the threshold value The is the time $t_{N,r}$, the signal component extraction unit 41b-N extracts the signal component at the time $t_{N,r}$ from the recovery signal.

The signal component extraction unit 41b-n outputs the extracted signal component to the signal integration unit 41c.

The signal integration unit 41c acquires a signal component from each of the signal component extraction units 41b-1 to 41b-N.

The signal integration unit 41c integrates a plurality of signal components and outputs a signal component after integration to the target detection unit 15.

The target detection unit 15 acquires a signal component after integration from the signal integration unit 41c.

The target detection unit 15 detects a target on the basis of the signal component after integration.

In the fifth embodiment described above, the target detection device 2 illustrated in FIG. 14 is configured in such a manner that the correlation processing unit 41 includes the correlation value calculation unit 41a to detect a time at which a signal component having a non-zero value is included in each of the recovery signals output from the plurality of signal recovery units 13-1 to 13-N and calculate a correlation value between times detected from each of the plurality of recovery signals, the plurality of signal component extraction units 41b-1 to 41b-N to extract a signal component at a time at which the correlation value calculated by the correlation value calculation unit 41a is equal to or larger than a threshold value from among recovery signals output from any one signal recovery unit 13-n among the plurality of signal recovery units 13-1 to 13-N, and the signal integration unit 41c to integrate signal components extracted by the plurality of signal component extraction units 41b-1 to 41b-N. Further, the target detection unit 15 of the target detection device 2 illustrated in FIG. 14 detects a target on the basis of the signal component after integration by the signal integration unit 41c. Therefore, similarly to the target detection device 2 illustrated in FIG. 1, the target detection device 2 illustrated in FIG. 14 can prevent the degradation of the target detection performance and suppress the noise component by a simple method, even when the compression processing of the reception signal is performed.

Sixth Embodiment

In a sixth embodiment, a target detection device 2 in which a correlation processing unit 42 includes a correlation value calculation unit 42a, complex amplitude estimation units 42b-1 to 42b-N, and a signal integration unit 42c will be described.

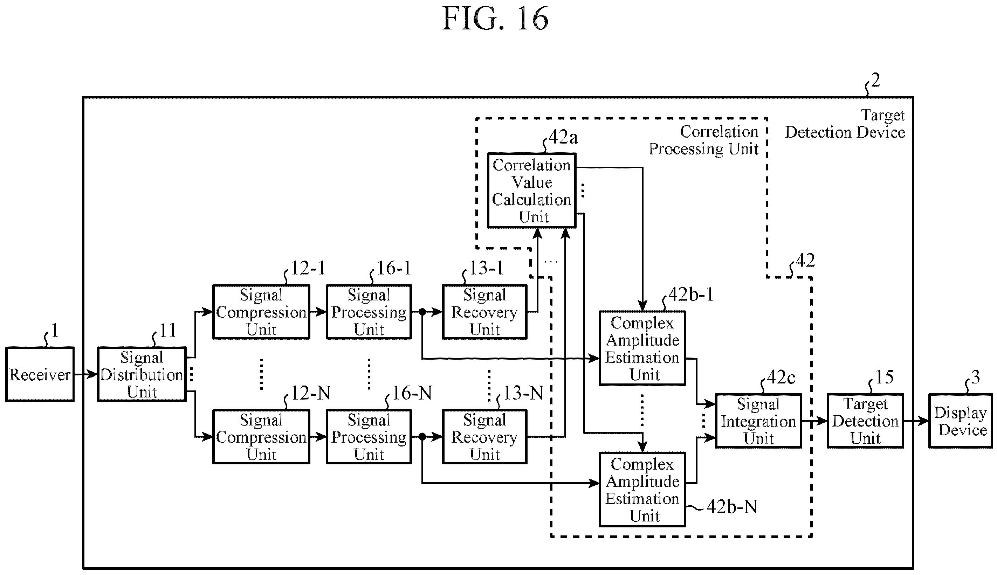

FIG. 16 is a configuration diagram illustrating the target detection device 2 according to the sixth embodiment. In FIG. 16, the same reference numerals as those in FIGS. 1, 7, 9, 12, and 14 denote the same or corresponding parts, and thus description thereof is omitted.

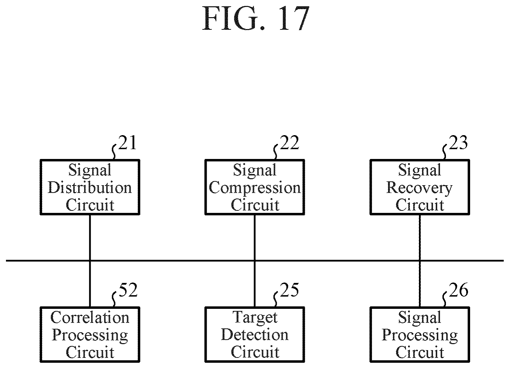

FIG. 17 is a hardware configuration diagram illustrating hardware of the target detection device 2 according to the sixth embodiment. In FIG. 17, the same reference numerals as those in FIGS. 2, 8, 10, 13, and 15 denote the same or corresponding parts, and thus description thereof is omitted.

The target detection device 2 illustrated in FIG. 16 includes a signal distribution unit 11, signal compression units 12-1 to 12-N, signal processing units 16-1 to 16-N, signal recovery units 13-1 to 13-N, the correlation processing unit 42, and a target detection unit 15. Here, this is merely an example, and the target detection device 2 may or may not include the signal processing units 16-1 to 16-N.

The correlation processing unit 42 is implemented by, for example, a correlation processing circuit 52 illustrated in FIG. 17.

The correlation processing unit 42 includes the correlation value calculation unit 42a, the complex amplitude estimation units 42b-1 to 42b-N, and the signal integration unit 42c.

The correlation processing unit 42 illustrated in FIG. 16 extracts signal components correlated with each other by a simpler method than that of the correlation processing unit 14 illustrated in FIG. 1.

The correlation value calculation unit 42a acquires a recovery signal from each of the signal recovery units 13-1 to 13-N.

The correlation value calculation unit 42a detects a time at which a signal component having a non-zero value is included in each recovery signal.

The correlation value calculation unit 42a calculates a correlation value between times detected from each of the plurality of recovery signals.

The complex amplitude estimation unit 42b-n (n = 1, ..., N) acquires the block #n from either the signal processing unit 16-n or the signal compression unit 12-n.

The complex amplitude estimation unit 42b-n estimates, in the block #n, a complex amplitude of the signal at the time when the correlation value calculated by the correlation value calculation unit 42a is equal to or larger than a threshold value.

The complex amplitude estimation unit 42b-n outputs the estimated complex amplitude to the signal integration unit 42c.

The signal integration unit 42c acquires the complex amplitude from each of the complex amplitude estimation units 42b-1 to 42b-N.

The signal integration unit 42c integrates the plurality of complex amplitudes and outputs the complex amplitude after integration to the target detection unit 15.

In FIG. 16, it is assumed that each of the signal distribution unit 11, the signal compression units 12-1 to 12-N, the signal processing units 16-1 to 16-N, the signal recovery units 13-1 to 13-N, the correlation processing unit 42, and the target detection unit 15, which are components of the target detection device 2, is implemented by dedicated hardware as illustrated in FIG. 17. That is, it is assumed that the target detection device 2 is implemented by the signal distribution circuit 21, the signal compression circuit 22, the signal processing circuit 26, the signal recovery circuit 23, the correlation processing circuit 52, and the target detection circuit 25.

Each of the signal distribution circuit 21, the signal compression circuit 22, the signal processing circuit 26, the signal recovery circuit 23, the correlation processing circuit 52, and the target detection circuit 25 corresponds to, for example, a single circuit, a composite circuit, a programmed processor, a parallel-programmed processor, an ASIC, an FPGA, or a combination thereof.

The components of the target detection device 2 are not limited to those implemented by dedicated hardware, and the target detection device 2 may be implemented by software, firmware, or a combination of software and firmware.

In a case where the target detection device 2 is implemented by software, firmware, or the like, a program for causing a computer to execute each processing procedure performed in the signal distribution unit 11, the signal compression units 12-1 to 12-N, the signal processing units 16-1 to 16-N, the signal recovery units 13-1 to 13-N, the correlation processing unit 42, and the target detection unit 15 is stored in the memory 31 illustrated in FIG. 3. Then, the processor 32 illustrated in FIG. 3 executes the program stored in the memory 31.

Further, FIG. 17 illustrates an example in which each of the components of the target detection device 2 is implemented by dedicated hardware, and FIG. 3 illustrates an example in which the target detection device 2 is implemented by software, firmware, or the like. However, this is merely an example, and some components in the target detection device 2 may be implemented by dedicated hardware, and the remaining components may be implemented by software, firmware, or the like.

Next, the operation of the target detection device 2 illustrated in FIG. 16 will be described. Here, the operation is similar to that of the target detection device 2 illustrated in FIG. 14 except for the correlation processing unit 42. Thus, here, the operation of the correlation processing unit 42 will be mainly described.

The correlation value calculation unit 42a of the correlation processing unit 42 acquires the recovery signal from the signal recovery unit 13-n (n = 1, ..., N).

The correlation value calculation unit 42a detects a time at which a signal component having a non-zero value is included in the recovery signal.

Similarly to the correlation value calculation unit 41a illustrated in FIG. 14, the correlation value calculation unit 42a calculates a correlation value C between times detected from each of the N recovery signals.

The correlation value calculation unit 42a outputs the correlation value C to each of the complex amplitude estimation units 42b-1 to 42b-N.

The complex amplitude estimation unit 42b-n (n = 1, ..., N) acquires the block #n from either the signal processing unit 16-n or the signal compression unit 12-n, and acquires the correlation value C from the correlation value calculation unit 42a.

The complex amplitude estimation unit 42b-n estimates a complex amplitude of the signal at the time when the correlation value C is equal to or larger than the threshold value The in the block #n. The threshold value The may be stored in an internal memory of the complex amplitude estimation unit 42b-n or may be given from the outside of the target detection device 2.

The complex amplitude estimation processing by the complex amplitude estimation unit 42b-n is similar to the complex amplitude recovery processing by the signal recovery unit 13-n.

The complex amplitude estimation unit 42b-n outputs the estimated complex amplitude to the signal integration unit 42c.

The signal integration unit 42c acquires the complex amplitude from each of the complex amplitude estimation units 42b-1 to 42b-N.

The signal integration unit 42c integrates the plurality of complex amplitudes and outputs the complex amplitude after integration to the target detection unit 15.

The target detection unit 15 acquires the complex amplitude after integration from the signal integration unit 42c.

The target detection unit 15 detects a target on the basis of the complex amplitude after integration.

In the above-described sixth embodiment, the target detection device 2 illustrated in FIG. 16 is configured in such a manner that the correlation processing unit 41 includes the correlation value calculation unit 42a to detect a time at which a signal component having a non-zero value is included in each of the recovery signals output from the plurality of signal recovery units 13-1 to 13-N and calculate a correlation value between times detected from each of the plurality of recovery signals, the plurality of complex amplitude estimation units 42b-1 to 42b-N to estimate a complex amplitude of a signal at a time at which the correlation value calculated by the correlation value calculation unit 42a is equal to or larger than a threshold value in the reception signal after compression by each of the signal compression units 12-n, and the signal integration unit 42c to integrate complex amplitudes estimated by the plurality of complex amplitude estimation units 42b-1 to 42b-N. Further, the target detection unit 15 of the target detection device 2 illustrated in FIG. 16 detects a target on the basis of the complex amplitude after integration by the signal integration unit 42c. Therefore, similarly to the target detection device 2 illustrated in FIG. 1, the target detection device 2 illustrated in FIG. 16 can prevent the degradation of the target detection performance and suppress the noise component by a simple method, even when the compression processing of the reception signal is performed.

Note that, in the present disclosure, free combinations of the embodiments, modifications of any components of the embodiments, or omissions of any components in the embodiments are possible.

INDUSTRIAL APPLICABILITY

The present disclosure is suitable for a target detection device and a target detection method.

REFERENCE SIGNS LIST

1: Receiver, 2: Target detection device, 3: Display device, 11: Signal distribution unit, 12-1 to 12-N: Signal compression unit, 13-1 to 13-N: Signal recovery unit, 14: Correlation processing unit, 15: Target detection unit, 16-1 to 16-N: Signal processing unit, 17: Signal integration unit, 18: Correlation processing unit, 18a: Signal replacement unit, 18b-1 to 18b-N: Signal component extraction unit, 18c: Signal integration unit, 19: Correlation processing unit, 19a: Signal component determination unit, 19b: Signal integration unit, 21: Signal distribution circuit, 22: Signal compression circuit, 23: Signal recovery circuit, 24: Correlation processing circuit, 25: Target detection circuit, 26: Signal processing circuit, 27: Signal integration circuit, 28: Correlation processing circuit, 29: Correlation processing circuit, 31: Memory, 32: Processor, 41: Correlation processing unit, 41a: Correlation value calculation unit, 41b-1 to 41b-N: Signal component extraction unit, 41c: Signal integration unit, 42: Correlation processing unit, 42a: Correlation value calculation unit, 42b-1 to 42b-N: Complex amplitude estimation unit, 42c: Signal integration unit, 51: Correlation processing circuit, 52: Correlation processing circuit

**Claims**

1. A target detection device comprising:

a signal distribution unit to acquire a reception signal indicating a reflected wave of a pulse wave every time the pulse wave is emitted into space and divide a plurality of acquired reception signals;

a plurality of signal compression units to compress respective reception signals after dividing by the signal distribution unit;

a plurality of signal recovery units to recover a delay time of a reception signal after compression by any one signal compression unit among the plurality of signal compression units and a complex amplitude of the reception signal after compression and output a recovery signal indicating the delay time and the complex amplitude;

a correlation processing unit to extract signal components correlated with each other from recovery signals output from the plurality of signal recovery units; and

a target detection unit to detect a target on a basis of the signal components extracted by the correlation processing unit.

2. The target detection device according to claim 1, further comprising:

a plurality of signal processing units to suppress a noise component included in a reception signal after compression by any one signal compression unit among the plurality of signal compression units, wherein

each of the signal recovery units

recovers a delay time of a reception signal after noise component suppression by any one signal processing unit among the plurality of signal processing units and a complex amplitude of the reception signal after noise component suppression, and outputs a recovery signal indicating the delay time and the complex amplitude to the correlation processing unit.

3. The target detection device according to claim 1, further comprising:

a signal integration unit to accumulate signal components extracted by the correlation processing unit and integrate a plurality of accumulated signal components, wherein

the target detection unit

detects a target on a basis of a signal component after integration by the signal integration unit.

4. The target detection device according to claim 1, wherein

the correlation processing unit includes:

a signal replacement unit to acquire recovery signals from the plurality of signal recovery units and replace the plurality of recovery signals;

a plurality of signal component extraction units to extract signal components correlated with each other from a recovery signal output from any one signal recovery unit among the plurality of signal recovery units and one recovery signal among a plurality of recovery signals after replacement by the signal replacement unit; and

a signal integration unit to integrate the signal components extracted by the plurality of signal component extraction units, and

the target detection unit

detects a target on a basis of the signal components after integration by the signal integration unit.

5. The target detection device according to claim 1, wherein

the correlation processing unit includes:

a signal component determination unit to output the plurality of recovery signals when a number of recovery signals having a signal component having a non-zero value is equal to or larger than a threshold value among recovery signals output from the plurality of signal recovery units, and output a recovery signal having only a signal component having a zero value as respective recovery signals when the number of recovery signals having a signal component having a non-zero value is less than the threshold value; and

a signal integration unit to integrate the plurality of recovery signals output from the signal component determination unit, and

the target detection unit

detects a target on a basis of the recovery signals after integration by the signal integration unit.

6. The target detection device according to claim 1, wherein

the correlation processing unit includes:

a correlation value calculation unit to detect a time at which a signal component having a non-zero value is included in each of the recovery signals output from the plurality of signal recovery units and calculate a correlation value between times detected from each of the plurality of recovery signals;

a plurality of signal component extraction units to extract a signal component at a time at which the correlation value calculated by the correlation value calculation unit is equal to or larger than a threshold value from among recovery signals output from any one signal recovery unit among the plurality of signal recovery units; and

a signal integration unit to integrate signal components extracted by the plurality of signal component extraction units, and

the target detection unit

detects a target on a basis of a signal component after integration by the signal integration unit.

7. The target detection device according to claim 1, wherein
the correlation processing unit includes:

a correlation value calculation unit to detect a time at which a signal component having a non-zero value is included in each of the recovery signals output from the plurality of signal recovery units and calculate a correlation value between times detected from each of the plurality of recovery signals;

a plurality of complex amplitude estimation units to estimate a complex amplitude of a signal at a time at which the correlation value calculated by the correlation value calculation unit is equal to or larger than a threshold value in the reception signal after compression by any one signal compression unit among the plurality of signal compression units; and

a signal integration unit to integrate complex amplitudes estimated by the plurality of complex amplitude estimation units, and

the target detection unit

detects a target on a basis of a complex amplitude after integration by the signal integration unit.

8. A target detection method comprising:

causing a signal distribution unit to acquire a reception signal indicating a reflected wave of a pulse wave every time the pulse wave is emitted into space and divide a plurality of acquired reception signals;

causing a plurality of signal compression units to compress respective reception signals after dividing by the signal distribution unit;

causing a plurality of signal recovery units to recover a delay time of a reception signal after compression by any one signal compression unit among the plurality of signal compression units and a complex amplitude of the reception signal after compression and output a recovery signal indicating the delay time and the complex amplitude;

causing a correlation processing unit to extract signal components correlated with each other from recovery signals output from the plurality of signal recovery units; and

causing a target detection unit to detect a target on a basis of the signal components extracted by the correlation processing unit.

# FIG. 1

Target Detection Device (2)

Receiver (1) → Signal Distribution Unit (11) → Signal Compression Unit (12-1) → Signal Recovery Unit (13-1) → Correlation Processing Unit (14) → Target Detection Unit (15) → Display Device (3)

Signal Compression Unit (12-N) → Signal Recovery Unit (13-N)

# FIG. 2

| Signal Distribution Circuit | Signal Compression Circuit | Signal Recovery Circuit |
|---|---|---|
| 21 | 22 | 23 |

| Correlation Processing Circuit | Target Detection Circuit |
|---|---|
| 24 | 25 |

# FIG. 3

| Memory | Processor |
|---|---|
| 31 | 32 |

# FIG. 4

```
        ┌─────────────┐
        │    START    │
        └─────────────┘
               │
               ▼
   ┌───────────────────────────┐
   │   Signal Distribution Unit │   ST1
   │ Time-Divides Reception Signal│
   └───────────────────────────┘
               │
               ▼
   ┌───────────────────────────┐
   │   Signal Compression Unit  │
   │ Compresses Reception Signal after│   ST2
   │        Time-Division       │
   └───────────────────────────┘
               │
               ▼
   ┌───────────────────────────┐
   │    Signal Recovery Unit    │
   │   Recovers Delay Time and  │   ST3
   │     Complex Amplitude      │
   └───────────────────────────┘
               │
               ▼
   ┌───────────────────────────┐
   │  Correlation Processing Unit│
   │  Extracts Signal Components │   ST4
   │   Correlated with Each Other│
   └───────────────────────────┘
               │
               ▼
   ┌───────────────────────────┐
   │ Target Detection Unit Detects Target│   ST5
   └───────────────────────────┘
               │
               ▼
        ┌─────────────┐
        │     END     │
        └─────────────┘
```

# FIG. 5

# FIG. 6A

Pulse Repetition Time

Reception Signal

Block #1    Block #2    ······    Block #N

# FIG. 6B

Pulse Repetition Time

Reception Signal

N Pieces    N Pieces    N Pieces

Block #1    Block #2    ······    Block #N

## FIG. 7

EP 4 660 664 A1

# FIG. 8

| 21 | 22 | 23 | 26 |
|---|---|---|---|
| Signal Distribution Circuit | Signal Compression Circuit | Signal Recovery Circuit | Signal Processing Circuit |

| 24 | 25 | 27 |
|---|---|---|
| Correlation Processing Circuit | Target Detection Circuit | Signal Integration Circuit |

FIG. 9

EP 4 660 664 A1

# FIG. 10

```
        ⌐21              ⌐22              ⌐23
  ┌──────────┐    ┌──────────┐    ┌──────────┐
  │  Signal  │    │  Signal  │    │  Signal  │
  │Distribution│  │Compression│   │ Recovery │
  │  Circuit │    │  Circuit │    │  Circuit │
  └──────────┘    └──────────┘    └──────────┘
       │               │               │
───────┼───────────────┼───────────────┼───────
       │               │               │
        ⌐28              ⌐25              ⌐26
  ┌──────────┐    ┌──────────┐    ┌──────────┐
  │Correlation│   │  Target  │    │  Signal  │
  │Processing│    │ Detection│    │Processing│
  │  Circuit │    │  Circuit │    │  Circuit │
  └──────────┘    └──────────┘    └──────────┘
```

# FIG. 11

Target Signal Component

Noise Component — Noise Component

Recovery Signal Output from
Signal Recovery Unit 13-n

No Correlation — No Correlation — Time

Noise Component

Recovery Signal Output from
Signal Replacement Unit 18a

No Correlation — There Is Correlation — No Correlation — Time

Noise Component — Target Signal Component

27

FIG. 12

Receiver — 1

Target Detection Device — 2

Signal Distribution Unit — 11

Signal Compression Unit — 12-1 … 12-N
Signal Processing Unit — 16-1 … 16-N
Signal Recovery Unit — 13-1 … 13-N

Correlation Processing Unit — 19
Signal Component Determination Unit — 19a
Signal Integration Unit — 19b

Target Detection Unit — 15

Display Device — 3

# FIG. 13

| 21 Signal Distribution Circuit | 22 Signal Compression Circuit | 23 Signal Recovery Circuit |
| 29 Correlation Processing Circuit | 25 Target Detection Circuit | 26 Signal Processing Circuit |

# FIG. 14

# FIG. 15

| Signal Distribution Circuit | Signal Compression Circuit | Signal Recovery Circuit |
|---|---|---|
| 21 | 22 | 23 |

| Correlation Processing Circuit | Target Detection Circuit | Signal Processing Circuit |
|---|---|---|
| 51 | 25 | 26 |

FIG. 16

EP 4 660 664 A1

# FIG. 17

**EP 4 660 664 A1**

## INTERNATIONAL SEARCH REPORT

| International application No. |
|---|
| **PCT/JP2023/012066** |

| | |
|---|---|
| **A. CLASSIFICATION OF SUBJECT MATTER** | |
| *G01S 13/10*(2006.01)i | |
| FI: G01S13/10 | |
| According to International Patent Classification (IPC) or to both national classification and IPC | |

| **B. FIELDS SEARCHED** |
|---|
| Minimum documentation searched (classification system followed by classification symbols) |
| G01S7/00-7/42; G01S13/00-13/95; |
| Documentation searched other than minimum documentation to the extent that such documents are included in the fields searched |
| Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |
| |

| **C. DOCUMENTS CONSIDERED TO BE RELEVANT** | | |
|---|---|---|
| Category* | Citation of document, with indication, where appropriate, of the relevant passages | Relevant to claim No. |
| A | JP 2014-196957 A (NEC CORPORATION) 16 October 2014 (2014-10-16)<br>entire text, all drawings | 1-8 |
| A | JP 2012-502269 A (KONINKLIJKE PHILIPS ELECTRONICS N.V.) 26 January 2012 (2012-01-26)<br>entire text, all drawings | 1-8 |
| A | WO 2008/063691 A2 (WILLIAM MARSH RICE UNIVERSITY) 29 May 2008 (2008-05-29)<br>entire text, all drawings | 1-8 |
| A | US 2017/0131394 A1 (INFINEON TECHNOLOGIES AG) 11 May 2017 (2017-05-11)<br>entire text, all drawings | 1-8 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/012066**

| Patent document cited in search report | | | Publication date (day/month/year) | Patent family member(s) | | | Publication date (day/month/year) |
|---|---|---|---|---|---|---|---|
| JP | 2014-196957 | A | 16 October 2014 | (Family: none) | | | |
| JP | 2012-502269 | A | 26 January 2012 | WO | 2010/026514 | A1 | |
| WO | 2008/063691 | A2 | 29 May 2008 | US | 2010/0001901 | A1 | |
| US | 2017/0131394 | A1 | 11 May 2017 | CN | 107064881 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MISHALL** ; **YC. ELDAR**. Sub-Nyquist Sampling. *IEEE Signal Processing Magazine*, November 2011, vol. 28 (6), 98-124

- **A. MASSA et al.** Compressive Sensing in Electromagnetics - A Review. *IEEE Antennas and Propagation Magazine*, 01 February 2015, vol. 57, 224-238